# FASCICULE DE BREVET EUROPEEN

(11) **EP 1 086 734 B1**
(45) Date de publication et mention de la délivrance du brevet: **19.03.2008**
(21) Numéro de dépôt: 00400065.9
(22) Date de dépôt: 12.01.2000
(51) Int. Cl.: B01D 19/00, C10G 49/22, B01D 45/12, B01D 53/26

(54) **Système de séparation gaz/liquide intervenant dans un procédé de conversion d'hydrocarbures**
Gas/Flüssigkeits-Trennungssystem in einem Verfahren zur Umsetzung von Kohlenwasserstoffen
Gas/liquid separation system in a hydrocarbon conversion process

(30) Priorité: 24.09.1999 FR 9912034
(43) Date de publication de la demande: 28.03.2001
(73) Titulaire: Institut Français du Pétrole, 92852 Rueil-Malmaison Cedex (FR)
(72) Inventeur: Boyer, Christophe, 69390 Charly (FR); Koudil, Abdelhakim, 69001 Lyon (FR); Gauthier, Thiérry, 69890 La Tour de Salvagnie (FR)

(56) Documents cités:
- EP-A- 0 085 206
- DE-B- 1 258 393
- GB-A- 2 036 606
- GB-A- 2 284 165
- US-A- 4 354 852
- US-A- 5 624 642

## Description

L'invention présentée s'applique aux procédés de raffinage ou de pétrochimie et de façon générale à toute conversion mettant simultanément en jeu une phase liquide, ou au moins un hydrocarbure, et une phase gaz, mélange d'hydrogène et de fractions vapeurs de l'hydrocarbure en équilibre thermodynamique avec la phase liquide. Le domaine d'application de l'invention concerne les procédés fonctionnant avec par exemple un rapport des débits massiques du gaz sur celui du liquide G/L compris habituellement entre 0.1 et 10 et le plus souvent entre 0.5 et 2. Il s'applique en particulier dans les procédés d'hydrotraitement.

Le procédé concerné a pour but en particulier de convertir, au moins en partie une charge d'hydrocarbures, par exemple un résidu atmosphérique obtenu par distillation directe d'un pétrole brut en fractions légères essence et gazole et en un produit plus lourd qui peut être utilisé comme charge un procédé de conversion plus sélectif tel que par exemple le craquage catalytique en lit fluide, après par exemple une étape intermédiaire de désasphaltage (extraction par solvant C3-C7 des asphaltènes). Le procédé peut également avoir pour but de convertir un distillat obtenu par distillation sous vide d'un résidu atmosphérique de pétrole brut en fractions légères essence et gazole et en un produit plus lourd qui peut être utilisé comme charge dans un procédé de conversion plus sélectif tel que par exemple le craquage catalytique en lit fluide. L'invention peut aussi s'appliquer aux procédés d'hydrotraitement de charges d'hydrocarbures lourdes ou légères tels que les procédés d'hydrodésulfuration, hydro-déazotation ou d'hydrodéaromatation.

On connaît par le document GB 2 036 606 A un séparateur permettant, de façon générale, de séparer des particules de matière d'un gaz, la séparation des particules étant essentiellement assurée à l'aide d'un tube générant un effet vortex, une baffle étant placée dans la partie inférieure du séparateur. A la sortie du tube à effet vortex, une jupe conique et un espace annulaire assurent la liaison avec la sortie gaz et permettent de collecter le liquide piégé et de le renvoyer par exemple, dans la partie inférieure du séparateur.

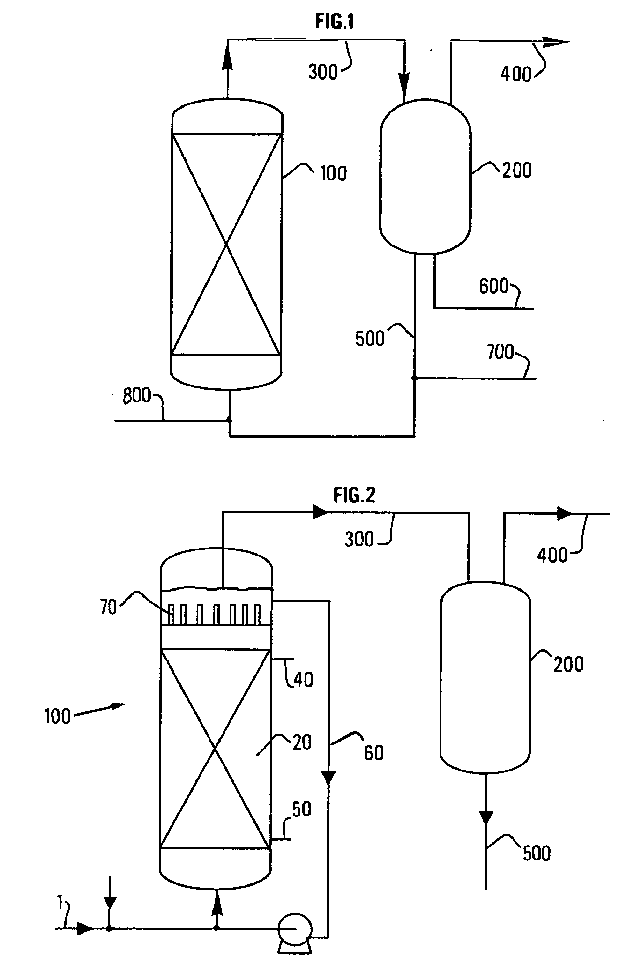

L'agencement du séparateur proposé (figure 1) peut être de deux types. Le séparateur (200) qui est placé en aval de la sortie liquide/gaz (300) du réacteur (100) peut être soit placé dans le circuit de recycle liquide du réacteur, soit être placé en sortie finale du réacteur. Le liquide issu de la séparation peut alors soit retourner au réacteur par le circuit de recycle (500), le produit étant alors soutiré en aval de (200) en (700), soit constituer le soutirage en produit du procédé. Le gaz séparé est évacué par (400).

Le temps de séjour dans le système de séparation (200) du liquide sera compris entre 30 sec et 10 min et le plus souvent entre 1 et 3 minutes, par exemple proche de 2 min. La plage du rapport des débits massiques gaz sur liquide G/L sera comprise entre 0.1 et 10 et plus préférentiellement entre 0.5 et 2. Les flux massiques de liquide dans le conduit d'entrée (300) à l'entrée du séparateur (200) sont en général compris entre 100 et 4000 kg/s/m². Ces flux massiques de gaz sont le plus souvent compris entre 100 et 800 kg/s/m² dans le conduit d'entrée (300) du séparateur.

La température des fluides est généralement comprise entre 20 et 600 °C, préférentiellement de 300 à 450° et la pression de fonctionnement peut varier de 1 à 200 bars. La viscosité dynamique du gaz sera comprise entre 10⁻² et 2.10⁻² cP, celle du liquide entre 0.3 et 5 cP. La tension superficielle sera comprise entre 20 et 70 mN/m. La masse volumique du liquide est généralement comprise entre 500 et 1000 kg/m³ et le plus souvent entre 500 et 700 kg/m³. La masse volumique du gaz est habituellement comprise entre 1 et 50 kg/m³, le plus souvent entre 30 et 50 kg/m³.

Une des originalités de ce système de séparation est de pouvoir fonctionner correctement pour les faibles valeurs de Δρ = ρ_{L}-ρ_{G} (proche de 500 kg/m³) et pour une large gamme de rapport des débits massiques G/L (entre 0.1 et 10).

Le système permet de continuer à fonctionner lorsque la phase liquide contient des particules solides de nature organique ou minérale.

### Description du système et du procédé associé

Le procédé associé à l'invention présentée est destiné par exemple à traiter un distillat sous vide issu d'une zone de distillation sous vide d'un pétrole brut. Le procédé d'hydrotraitement (figure 2) fonctionne en général en présence d'hydrogène et comprend au moins un réacteur triphasique (100) contenant un catalyseur d'hydrotraitement convertissant en lit bouillonnant (20), fonctionnant généralement en écoulement à courant ascendant de liquide et de gaz. Le réacteur comporte de préférence au moins un moyen de soutirage de catalyseur hors dudit réacteur situé à proximité du bas du réacteur (50) et au moins un moyen d'appoint de catalyseur frais à proximité du sommet dudit réacteur (40). Ledit réacteur comporte au moins un circuit de recycle de la phase liquide (60), situé à l'intérieur ou à l'extérieur du réacteur, et destiné à maintenir un niveau d'expansion du lit suffisant nécessaire au fonctionnement en régime triphasique bouillonnant. Au sommet du réacteur, en aval de l'expansion du lit, un système de séparation axial gaz/liquide interne au réacteur permet de séparer la phase liquide à recycler (70). Le niveau de liquide dans ce séparateur interne est maintenu par la conduite (300) destinée à l'échappement de la phase gaz et au prélèvement des produits en phase liquide. L'écoulement de ces deux phases rejoint alors le séparateur correspondant à cette invention (200).

Il est nécessaire d'obtenir une excellente séparation liquide gaz en aval du réacteur. En effet, si du liquide est entraîné en sortie gaz, cela va générer des fluctuations du procédé (« fluctuations process ») au niveau des échangeurs de chaleur. De même, si une fraction de gaz est aspirée du coté de la sortie liquide sous forme de poches, cela entraînera des pics de pression dans les conduites en aval du séparateur qui déstabiliseront l'écoulement stationnaire des produits. Ces dysfonctionnements sont donc nuisibles à la conduite des unités situées en aval du séparateur gaz/liquide. Dans le cas des unités d'hydrotraitement ou d'hydroconversion, cela conduit de plus une perte coûteuse en hydrogène, II donc indispensable de disposer d'un système permettant une séparation rapide et efficace des deux phases liquide et gaz associée à une bonne régulation du niveau de liquide dans l'enceinte.

Afin de limiter l'exposition du liquide à la haute température en dehors du réacteur pour limiter la dégradation thermique, il est indispensable de limiter le temps de séjour des liquides.

L'objet de l'invention est donc de proposer un procédé de séparation gaz liquide efficace permettant l'évacuation rapide du liquide, caractérisé par le fait que ce système reste performant lorsque l'écart de densité liquide-gaz est faible (400-1000 kg/m³).

Ce procédé de séparation de liquide(s) et de gaz en provenance d'une zone de conversion d'hydrocarbures est effectué dans une zone comportant généralement trois sections successives, la première section dite primaire fonctionnant pour les écoulements à G/L compris entre environ 0,1 et 10, la deuxième section dite secondaire fonctionnera pour les écoulements à G/L compris entre environ 10 et 50, la troisième section servant à limiter la formation d'un vortex liquide, où G/L est le rapport des débits massiques gaz sur liquide.

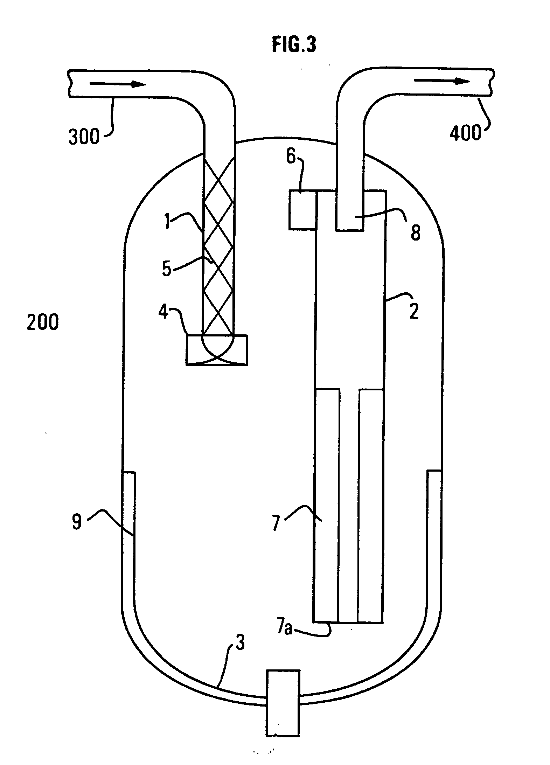

La présente invention concerne également l'appareillage ou le système de séparation constitué de trois sections différentes (voir figure 3) :
- un séparateur primaire (1) pour les écoulements à G/L compris entre environ 0.1 et 10
- un séparateur secondaire (2) pour les écoulements à G/L compris entre environ 10 et 50
- un système limitant la formation de vortex liquide (3).

Les dimensions de l'enceinte (200) et la position imposée du niveau normal de liquide dans l'enceinte (200) sont déterminées de façon à imposer un temps de séjour compris entre 1 et 10 min et de préférence proche de 2 min.

Le séparateur doit permettre d'atteindre une efficacité de séparation telle qu'il ne reste plus que entre 0.1 et 0.5 % maximum (en poids) de liquide dans la phase gaz en sortie du séparateur et entre 0.5 et 1 % maximum (en poids) de gaz dans la phase liquide en sortie du séparateur.

Le séparateur primaire (1) est constitué de préférence d'un tube terminé par au moins une sortie tangentielle, imposant à l'écoulement une rotation de 90° à la sortie du tube. A titre d'exemple, le rapport de l'aire des fenêtres d'ouverture de chaque sortie tangentielle et l'aire de la section de passage dans le tube est compris entre 0.25 et 1, de préférence 0.5. Le rapport entre la hauteur et la largeur de chaque fenêtre est compris entre 1 et 4, de préférence 2. A l'intérieur du tube, à l'amont des sorties tangentielles, une hélice peut être ajoutée. Cette hélice (5) peut être à simple révolution ou à double révolution. Le rapport de la largeur de l'hélice, correspondant à la section de passage des fluides, sur le diamètre du tube doit être compris généralement entre 0.5 et 1. Le nombre de pas de l'hélice (soit le rapport de la hauteur totale sur le pas de l'hélice) doit être compris généralement entre 1 et 6, et préférentiellement entre 2 et 3.

Le séparateur primaire (1) est traversé par la totalité de l'écoulement gaz/liquide entrant dans le séparateur. L'efficacité de ce séparateur est en général comprise entre 70 et 90 % coté sortie gaz. L'écoulement de gaz produit à l'issue de la séparation gaz/liquide dans le séparateur primaire (1) se dirige vers le séparateur secondaire (2).

Le séparateur secondaire (2) est constitué d'un cyclone à entrée tangentielle libre (6). A titre d'exemple, l'entrée tangentielle (6) est à section rectangulaire, le rapport de la largeur sur la hauteur de cette section est compris entre 0.2 et 0.6, et préférentiellement proche de 0.5. Le rapport de l'aire de la section d'entrée sur l'aire de la section du cyclone (2) est généralement compris entre 0.06 et 0.25, et souvent proche de 0.12. Le rapport du diamètre de la conduite de sortie de l'écoulement gaz (8) sur le diamètre du cyclone est généralement compris entre 0.3 et 0.6 et de préférence proche de 0.5. Ce rapport doit être maximisé de façon à réduire la ΔP (différence de pression entre l'entrée et la sortie du cyclone) dans le cyclone. Le rapport de la hauteur de la conduite sortie gaz (8) sur le diamètre du cyclone est souvent compris entre 0 et 1, et très souvent proche de 0.5. La sortie liquide de ce cyclone (7a) reste toujours en dessous du niveau liquide dans l'enceinte du séparateur (200). La sortie liquide du cyclone (7) est de même diamètre que le cyclone et comporte des pales adhérentes aux parois. Ces pales sont réparties à pas angulaire constant et sont au nombre de 2 à 8 et par exemple de 4. Le rapport de la largeur de ces pales sur le diamètre du cyclone est compris entre 0.15 et 1, et préférentiellement proche de 0.3. La hauteur des pales est définie de façon à laisser une hauteur entre le sommet du cyclone et le sommet des pales comprise entre 2 et 5 diamètres de cyclone, préférentiellement 2 et 3 diamètres de cyclone, et à prolonger les pales jusqu'à la base du cyclone. La hauteur de liquide dans l'enceinte (200) doit correspondre au minimum à la base du cône de sortie de l'enceinte (200) et à la base du cyclone. La hauteur maximum du niveau liquide doit être au maximum inférieure à 3 diamètres de cyclone du sommet du cyclone, et de préférence inférieure de 4 à 6 diamètres du sommet du cyclone de façon à prendre en compte la perte de pression dans le cyclone. La hauteur séparant la sortie du séparateur primaire (4) de l'entrée du séparateur secondaire (6) doit être supérieure à deux hauteurs de l'entrée rectangulaire (6), l'entrée tangentielle du séparateur cyclonique étant située au-dessus de la sortie tangentielle (4) du séparateur primaire.

La combinaison des deux séparateurs (1) et (2) permet d'obtenir une bonne compacité pour l'ensemble du séparateur et permet notamment de limiter le diamètre de l'enceinte (200). La hauteur imposée par le cyclone ne jouant que sur le temps de séjour du gaz, le système de séparateur gaz/liquide proposé permet donc de conserver un faible temps de séjour pour le liquide.

Le séparateur comporte en fond de l'enceinte (200) un système (3) permettant d'éviter toute formation d'un vortex dans la phase liquide de façon à limiter tout entraînement de gaz coté sortie liquide. Ce système est composé de pales (9) adhérentes aux parois disposées à pas angulaire constant permettant de dissiper la quantité de mouvement angulaire. Ces pales seront au nombre de 2 à 8 et de préférence au nombre de 4. La hauteur de ces pales sera comprise entre la hauteur maximum du liquide et la partie basse du séparateur primaire (1). Le rapport entre la largeur de ces pales et le diamètre de l'enceinte sera compris entre 0.02 et 0.1, de préférence proche de 0.05. De façon à réduire la longueur et la force du coeur du vortex, un cylindre peut être ajouté au fond de l'enceinte (200), dans l'axe de l'écoulement de sortie liquide. Ce cylindre aura le même diamètre que la conduite de sortie liquide et une hauteur comprise entre 0.5 et 2 diamètres de conduite de sortie liquide. Ce cylindre peut être de paroi massive ou de paroi constituée d'une grille et dans cas être fermée sur la partie supérieure.

## Revendications

1. Procédé de séparation de liquide(s) et de gaz en provenance d'une zone de conversion d'hydrocarbures, ledit procédé étant effectué dans une zone de séparation comportant
. un séparateur primaire dans la première section dite primaire fonctionnant pour les écoulements à G/L compris entre environ 0.1 et 10,
. un séparateur secondaire dans la deuxième section dite secondaire fonctionnant pour les écoulements à G/L compris entre environ 10 et 50,
. un système limitant la formation de vortex liquide (3) dans la troisième section,
où G/L est le rapport des débits massiques gaz sur liquide.

2. Procédé selon la revendication 1 dans lequel le temps de séjour dans la zone de séparation (200) du liquide est compris entre 30 sec et 10 min, la plage du rapport des débits massiques gaz sur liquide G/L étant comprise entre 0.1 et 10 et plus préférentiellement entre 0.5 et 2 à l'entrée, les flux massiques de liquide dans le conduit d'entrée du séparateur étant généralement compris entre 100 et 4000 kg/s/m².

3. Procédé selon la revendication 2 dans lequel la température des fluides est généralement comprise entre 20 et 600 °C, préférentiellement de 300 à 450° et la pression de fonctionnement pouvant varier de 1 à 200 bars dans la zone de séparation la viscosité dynamique du gaz étant comprise entre 10⁻² et 2.10⁻² cP, celle du liquide entre 0.3 et 5 cP, la tension superficielle étant comprise entre 20 et 70 mN/m, la masse volumique du liquide étant généralement comprise entre 500 et 1000 kg/m³, la masse volumique du gaz étant habituellement comprise entre 1 et 50 kg/m³.

4. Procédé selon l'une des revendications 1 à 3 appliqué à la séparation d'effluents provenant d'un procédé d'hydrotraitement fonctionnant en présence d'hydrogène et comprenant au moins un réacteur triphasique contenant un catalyseur d'hydrotraitement convertissant en lit bouillonnant, fonctionnant généralement en écoulement à courant ascendant de liquide et de gaz, la zone de réaction comportant de préférence au moins un moyen de soutirage de catalyseur hors dudit réacteur situé à proximité du bas du réacteur et au moins un moyen d'appoint de catalyseur frais à proximité du sommet dudit réacteur, ladite zone de réaction comportant au moins un circuit de recycle de la phase liquide situé à l'intérieur ou à l'extérieur de la zone de réaction, et destiné à maintenir un niveau d'expansion du lit suffisant nécessaire au fonctionnement en régime triphasique bouillonnant, le procédé consistant en outre en ce que au sommet du réacteur, en aval de l'expansion du lit, un système de séparation axial gaz/liquide interne au réacteur permet de séparer la phase liquide à recycler, le niveau de liquide dans ce séparateur interne étant maintenu par une conduite destinée à l'échappement de la phase gaz et au prélèvement des produits en phase liquide, l'écoulement de ces deux phases rejoignant alors la zone de séparation selon l'invention.

5. Appareil comportant un système de séparation ou " enceinte de séparation " constitué de:
. un séparateur primaire constitué d'un tube terminé par au moins une sortie tangentielle, imposant à l'écoulement une rotation de 90° à la sortie du tube,
. un séparateur secondaire constitué d'un cyclone à entrée tangentielle libre,
. un système limitant la formation de vortex liquide (3).

6. Appareil selon la revendication 5 dans lequel les dimensions de l'enceinte (200) et la position imposée du niveau normal de liquide dans l'enceinte (200) sont déterminées de façon à imposer un temps de séjour compris entre 1 et 10 minutes et de préférence proche de 2 minutes.

7. Appareil selon l'une des revendications 5 et 6 dans lequel pour ledit tube du séparateur primaire, le rapport de l'aire des fenêtres d'ouverture de chaque sortie tangentielle et l'aire de la section de passage dans le tube est compris entre 0.25 et 1, et le rapport entre la hauteur et la largeurs de chaque fenêtre est compris entre 1 et 4.

8. Appareil selon l'une des revendications 5 à 7 dans lequel, dans le séparateur primaire, on ajoute à l'intérieur du tube, à l'amont des sorties tangentielles, une hélice, cette hélice pouvant être à simple révolution ou à double révolution, le rapport de la largeur de l'hélice, correspondant à la section de passage des fluides, sur le diamètre du tube étant compris généralement entre 0.5 et 1, le nombre de pas de l'hélice, soit le rapport de la hauteur totale sur le pas de l'hélice, étant compris généralement entre 1 et 6, et préférentiellement entre 2 et 3.

9. Appareil selon l'une des revendications 5 à 7 dans lequel l'entrée tangentielle (6) du séparateur secondaire est à section rectangulaire, le rapport de la largeur sur la hauteur de cette section étant compris entre 0.2 et 0.6.

10. Appareil selon l'une des revendications 5 à 9 dans lequel dans le séparateur secondaire, le rapport de l'aire de la section d'entrée sur l'aire de la section du cyclone (2) est généralement compris entre 0.06 et 0.25, le rapport du diamètre de la conduite de sortie de l'écoulement gaz (8) sur le diamètre du cyclone est généralement compris entre 0.3 et 0.6, le rapport de la hauteur de la conduite sortie gaz (8) sur le diamètre du cyclone étant compris entre 0 et 1.

11. Appareil selon l'une des revendications 5 à 10 dans lequel, dans le séparateur secondaire la sortie liquide de ce cyclone (7a) reste toujours en dessous du niveau liquide dans l'enceinte du séparateur, la sortie liquide du cyclone étant de même diamètre que le cyclone et comportant des pales adhérentes aux parois, réparties à pas angulaire constant et étant au nombre de 2 à 8 et le rapport de la largeur de ces pales sur le diamètre du cyclone étant compris entre 0.15 et 1.

12. Appareil selon l'une des revendications 5 à 11 dans lequel ledit système limitant la formation de vortex liquide est composé de pales adhérentes aux parois disposées à pas angulaire constant permettant de dissiper la quantité de mouvements angulaires, ces pales étant au nombre de 2 à 8, la hauteur de ces pales étant comprise entre la hauteur maximum du liquide et la partie basse du séparateur primaire (1).

13. Appareil selon l'une des revendications 5 à 12 dans lequel un cylindre est ajouté au fond de l'enceinte, dans l'axe de l'écoulement de sortie liquide, ce cylindre ayant le même diamètre que la conduite de sortie liquide et une hauteur comprise entre 0.5 et 2 diamètres de conduite de sortie liquide, ce cylindre pouvant être de paroi massive ou de paroi constituée d'une grille et dans ce cas être fermée sur la partie supérieure.

## Claims

1. A process for separating liquid(s) and gas originating from a hydrocarbon hydroconversion zone, said process being carried out in a separation zone comprising:
- a primary separator in the first section, said primary section, functioning for flows with a G/L in the range about 0.1 to 10,
- a secondary separator in the second section, said secondary section, functioning for flows with a G/L in the range about 10 to 50,
- a system to limit the formation of a liquid vortex (3) in the third section,
where G/L is the ratio of the gas to liquid mass flow rates.

2. A process according to claim 1, in which the residence time in the liquid separation zone (200) is in the range 30 seconds to 10 minutes, the range of the ratio of the gas to liquid mass flow rates, G/L being in the range 0.1 to 10, and more preferably in the range 0.5 to 2 at the inlet, the liquid mass flow rates in the separator inlet line being generally in the range 100 to 4000 kg/s/m².

3. A process according to claim 2, in which the fluid temperature is generally in the range 20°C to 600°C, preferably in the range 300 to 450°C and the operating pressure may vary in the range 1 to 200 bars in the separation zone, the dynamic viscosity of the gas is in the range 10⁻² to 2.10⁻² cP, that of the liquid in the range 0.3 to 5 cP, the surface tension being in the range 20 to 70 mN/m, the density of the liquid being generally in the range 500 to 1000 kg/m³, and the density of the gas is normally in the range 1 to 50 kg/m³.

4. A process according to any one of claims 1 to 3 applied to separating effluents originating from a hydrotreatment process functioning in the presence of hydrogen and comprising at least one three phase reactor containing a hydrotreatment catalyst which converts in an ebullated bed, generally functioning in liquid and gas flow upmode, the reaction zone preferably comprising al least one means for extracting catalyst from said reactor located close to the bottom and at least one means for adding fresh catalyst close to the top of said reactor, said reaction zone comprising at least one liquid phase recycling circuit located inside or outside the reactor, and intended to maintain a sufficient degree of expansion of the bed necessary for the bed to function in a three-phase ebullated operation, the process further consisting in that at the top of the reactor, downstream of the bed expansion, an axial gas-liquid separation system inside the reactor enables to separate the liquid phase to be recycled, the level of liquid in this internal separator being maintained by a line intended for the escape of gas phase and for withdrawing liquid phase products, the flow of these two phases then entering the separation zone of the invention.

5. An apparatus comprising a separation system or "separation vessel" constituted by:
- a primary separator constituted by a tube terminated by at least one tangential outlet, causing the flow to rotate through 90° at the tube outlet,
- a secondary separator constituted by a cyclone with a free tangential inlet,
- a system which limits the formation of a liquid vortex (3).

6. An apparatus according to claim 5, in which the dimensions of the vessel (200) and the position imposed on the normal liquid level in vessel (200) are determined so as to impose a residence time in the range 1 to 10 minutes, preferably close to 2 minutes.

7. An apparatus according to claim 5 or claim 6 in which for said tube of the primary separator , the ratio of the area of the openings in each tangential outlet and the area of the cross section of flow in the tube is in the range 0.25 to 1, and the ratio between the height and width of each opening in the range 1 to 4.

8. An apparatus according to any one of claims 5 to 7, in which in the primary separator, a helix is added inside the tube upstream of the tangential outlets, said helix being a single or double helix, the ratio of the helix width, corresponding to the cross section of flow of the fluids, to the tube diameter being generally in the range 0.5 to 1, the pitch number of the helix, i.e the ratio of the total height to the helix pitch, generally being in the range 1 to 6, and preferably in the range 2 to 3.

9. An apparatus according to any one of claims 5 to 7, in which the tangential inlet (6) of secondary separator has a rectangular cross section, the ratio of the width to the length of this cross section being in the range 0.2 to 0.6.

10. An apparatus according to any one of claims 5 to 9, in which, in the secondary separator, the ratio of the cross sectional area of the inlet to the cross sectional area of the cyclone (2) is generally in the range 0.06 to 0.25, the ratio of the diameter of the gas flow outlet line (8) to the cyclone diameter is generally in the range 0.3 to 0.6, and the ratio of the height of the gas outlet line (8) to the cyclone diameter is in the range 0 to 1.

11. An apparatus according to any one of claims 5 to 10 in which, in the secondary separator, the liquid outlet (7a) from the cyclone is always below the liquid level in the separator vessel, the liquid outlet from the cyclone having the same diameter as the cyclone and comprising blades attached to the walls, distributed at a constant angular spacing and being 2 to 8 in number, and the ratio of the width of said blades to the cyclone diameter being in the range 0.15 to 1.

12. An apparatus according to any one of claims 5 to 11 in which said system limiting the formation of a liquid vortex is composed of blades attached to the walls located at a constant angular spacing and being 2 to 8 in number, and the height of these blades being in the range between the maximum depth of the liquid and the bottom portion of the primary separator (1).

13. An apparatus according to any one of claims 5 to 12, in which a cylinder is added to the base of the vessel, in the axis of flow of the liquid outlet, said cylinder having the same diameter as the liquid outlet line and a height in the range 0.5 to 2 diameters of the liquid outlet line, said cylinder having massive walls or a wall constituted by a screen and in this case being closed at its upper portion.

## Patentansprüche

1. Verfahren zur Abscheidung von Flüssigkeit(en) und Gas, die aus einer Zone zur Umwandlung von Kohlenwasserstoffen stammen, wobei das Verfahren in einer Abscheidungszone ausgeführt wird, umfassend:
. einen ersten Abscheider in einem ersten so genannten primären Abschnitt, der für G/F-Ströme im Bereich zwischen 0,1 und 10 arbeitet,
. einen zweiten Abscheider in einem zweiten so genannten sekundären Abschnitt, der für G/F-Ströme im Bereich zwischen 10 und 50 arbeiten wird,
. ein System, das die Bildung eines Flüssigkeitswirbels (3) in dem dritten Abschnitt begrenzt, in dem G/F das Massendurchsatzverhältnis von Gas zu Flüssigkeit ist.

2. Verfahren nach Anspruch 1, in dem die Verweildauer der Flüssigkeit in der Abscheidungszone (200) im Bereich zwischen 30 Sek. und 10 Min. liegt, wobei die Spanne des Massendurchsatzverhältnisses von Gas zu Flüssigkeit G/F am Einlass im Bereich zwischen 0,1 und 10, und besonders bevorzugt zwischen 0,5 und 2 liegt, wobei die Masseströme der Flüssigkeit in der Einlassleitung des Abscheiders im Allgemeinen im Bereich zwischen 100 und 4.000 kg/Sek./m² liegen.

3. Verfahren nach Anspruch 2, in dem die Temperatur der Fluide im Allgemeinen im Bereich zwischen 20 und 600 °C, bevorzugt zwischen 300 und 450 °C liegt, und der Betriebsdruck in der Abscheidungszone zwischen 1 und 200 Bar variieren kann, wobei die dynamische Viskosität des Gases im Bereich zwischen 10⁻² und 2*10² cP, die der Flüssigkeit zwischen 0,3 und 5 cP liegt, wobei der Oberflächendruck im Bereich zwischen 20 und 70 mN/m liegt, die Dichte der Flüssigkeit im Allgemeinen im Bereich zwischen 500 und 1.000 kg/m³ liegt, wobei die Dichte des Gases üblicherweise im Bereich zwischen 1 und 50 kg/m³ liegt.

4. Verfahren nach einem der Ansprüche 1 bis 3, das auf die Abscheidung von Abflüssen angewendet wird, die aus einem Verfahren zur Hydrobehandlung stammen, das in Gegenwart von Wasserstoff arbeitet und mindestens einen dreiphasigen Reaktor umfasst, der einen im wallenden Bett umwandelnden Katalysator zur Hydrobehandlung enthält, der im Allgemeinen mit aufsteigendem Flüssigkeits- und Gasstrom arbeitet, wobei die Reaktionszone bevorzugt mindestens ein Mittel zum Entnehmen des Katalysators außerhalb dieses Katalysators, das in der Nähe des Reaktorbodens liegt, und mindestens ein Mittel zur Zuführung des frischen Katalysators in der Nähe der Spitze dieses Reaktors umfasst, wobei die Reaktionszone mindestens einen Recyclingkreislauf der flüssigen Phase umfasst, der innerhalb oder außerhalb der Reaktionszone liegt, und dazu dient, ein ausreichendes Expansionsniveau des Betts aufrecht zu erhalten, das für den Betrieb im wallenden dreiphasigen Modus erforderlich ist, wobei das Verfahren ferner darin besteht, dass an der Spitze des Reaktors, stromabwärts der Expansion des Betts, ein axiales Gas/Flüssigkeitsabscheidungssystem innerhalb des Reaktors es ermöglicht, die zu recycelnde flüssige Phase abzuscheiden, wobei das Flüssigkeitsniveau in diesem inneren Abscheider durch eine Leitung aufrecht erhalten wird, die dem Austreten der Gasphase und der Entnahme der Produkte in der flüssigen Phase dient, wobei die Ströme dieser beiden Phasen dann in die Abscheidungszone zur Abscheidung gemäß der Erfindung geleitet werden.

5. Vorrichtung, die ein Abscheidungssystem oder einen "Abscheidungsbehälter" umfasst, bestehend aus:
. einem primären Abscheider, der aus einem Rohr besteht, das mindestens mit einem tangentialen Auslass abschließt, der den Strom am Ausgang des Rohrs zu einer 90°-Rotation zwingt,
. einem sekundären Abscheider, der aus einem Zyklon mit freiem tangentialem Einlass besteht,
. einem System, das die Bildung von Flüssigkeitswirbeln (3) begrenzt.

6. Vorrichtung nach Anspruch 5, in der die Abmessungen des Behälters (200) und die Lage im Behälter (200), die von dem normalen Flüssigkeitsniveau erzwungen wird, so festgelegt sind, dass sie eine Verweildauer im Bereich zwischen 1 und 10 Minuten, und bevorzugt nahe an 2 Minuten, erzwingen.

7. Vorrichtung nach einem der Ansprüche 5 und 6, in der für das Rohr des primären Abscheiders das Verhältnis der Fläche der Öffnungsfenster jedes tangentialen Auslasses und der Fläche des Durchtrittsquerschnitt in dem Rohr im Bereich zwischen 0,25 und 1, und das Verhältnis zwischen der Höhe und der Breite jedes Fensters im Bereich zwischen 1 und 4 liegt.

8. Vorrichtung nach einem der Ansprüche 5 bis 7, in der in dem primären Abscheider im Innern des Rohrs stromaufwärts der tangentialen Auslässe eine Helix hinzugefügt wird, wobei diese Helix eine oder zwei Windungen haben kann, wobei das Verhältnis der Breite der Helix, die dem Durchtrittsquerschnitt der Fluide entspricht, zum Durchmesser des Rohrs im Allgemeinen im Bereich zwischen 0,5 und 1 liegt, wobei die Anzahl der Teilungen der Helix, d. h. das Verhältnis der Gesamthöhe zur Teilung der Helix im Allgemeinen zwischen 1 und 6, und bevorzugt zwischen 2 und 3 liegt.

9. Vorrichtung nach einem der Ansprüche 5 bis 7, in der der tangentiale Einlass (6) des sekundären Abscheiders einen rechteckigen Querschnitt hat, wobei das Verhältnis der Breite zur Höhe dieses Abschnitts im Bereich zwischen 0,2 und 0,6 liegt.

10. Vorrichtung nach einem der Ansprüche 5 bis 9, in der in dem sekundären Abscheider das Verhältnis der Fläche des Einlassquerschnitts zum Zyklonquerschnitt (2) im Allgemeinen im Bereich zwischen 0,06 und 0,25 liegt, das Verhältnis des Durchmessers der Auslassleitung des Gasstroms (8) zum Durchmesser des Zyklons im Allgemeinen im Bereich zwischen 0,3 und 0,6 liegt, wobei das Verhältnis der Höhe der Gasauslassleitung (8) zum Durchmesser des Zyklons im Bereich zwischen 0 und 1 liegt.

11. Vorrichtung nach einem der Ansprüche 5 bis 10, in der in dem sekundären Abscheider der Flüssigkeitsauslass dieses Zyklons (7a) immer unterhalb des Flüssigkeitsniveaus in dem Behälter des Abscheiders bleibt, wobei der Flüssigkeitsauslass des Zyklons den gleichen Durchmesser hat wie der Zyklon und Blätter umfasst, die an den Wänden befestigt sind, die.in regelmäßigem Teilungswinkel verteilt sind, und deren Anzahl zwischen 2 und 8 liegt, und wobei das Verhältnis der Breite dieser Blätter zum Durchmesser des Zyklons im Bereich zwischen 0,15 und 1 liegt.

12. Vorrichtung nach einem der Ansprüche 5 bis 11, in der das System, das die Bildung von Flüssigkeitswirbeln begrenzt, aus Blättern besteht, die an den Wänden befestigt sind, die in regelmäßigem Teilungswinkel angeordnet sind, die es ermöglichen, die Menge der Drehimpulse abzuleiten , wobei die Anzahl dieser Blätter zwischen 2 und 8 liegt, wobei die Höhe dieser Blätter im Bereich zwischen der maximalen Höhe der Flüssigkeit und dem unteren Teil des primären Abscheiders (1) liegt.

13. Vorrichtung nach einem der Ansprüche 5 bis 12, in dem ein Zylinder am Boden des Behälters in der Strömungsachse des Flüssigkeitsauslasses hinzugefügt wird, wobei dieser Zylinder den gleichen Durchmesser hat wie die Flüssigkeitsauslassleitung und eine Höhe im Bereich zwischen 0,5 und 2 Durchmesser der Flüssigkeitsauslassleitung, wobei dieser Zylinder eine massive Wand haben kann, oder eine Wand, die aus einem Gitter besteht, und die in diesem Fall am oberen Teil geschlossen ist.
